# EUROPÄISCHE PATENTSCHRIFT

(11) **EP 1 437 514 B1**
(45) Veröffentlichungstag und Bekanntmachung des Hinweises auf die Patenterteilung: **02.03.2011**
(21) Anmeldenummer: 03020664.3
(22) Anmeldetag: 11.09.2003
(51) Int. Cl.: F15B 15/08

(54) **Druckmittelzylinder mit einem längsgeschlitzten Zylinderrohr**
Fluid pressure cylinder with a slit cylinder barrel
Vérin sans tige

(30) Priorität: 10.01.2003 DE 10300603
(43) Veröffentlichungstag der Anmeldung: 14.07.2004
(73) Patentinhaber: Carl Freudenberg KG, 69469 Weinheim (DE)
(72) Erfinder: Wüstenhagen, Ulrich, 34613 Schwalmstadt (DE); Kinsch, Patrick, 34590 Wabern (DE)

(56) Entgegenhaltungen:
- EP-A- 0 260 344
- EP-A- 0 531 131
- EP-A- 1 085 218
- PATENT ABSTRACTS OF JAPAN Bd. 017, Nr. 447 (M-1464), 17. August 1993 (1993-08-17) & JP 05 099207 A (CKD CORP), 20. April 1993 (1993-04-20)

## Beschreibung

Die Erfindung betrifft einen Druckmittelzylinder mit einem in einem längsgeschlitzten Zylinderrohr längsbeweglichen Kolben, der mit einem durch den Zylinderlängsschlitz ragenden Kolbenanschlusselement verbunden ist, mit einem den Zylinderlängsschlitz an der Zylinderinnenseite dicht verschließenden, elastisch verformbaren Dichtband, das an der Zylinderinnenseite anliegende Bandrandstreifen und an der dem Zylinderlängsschlitz zugekehrten Bandrückseite vorspringende Längswülste aufweist.

### Stand der Technik

Bei derartigen Druckmittelzylindern ist der im Zylinderrohr längsbewegliche Kolben nicht über eine stirnseitig herausgeführte Kolbenstange, sondern über das durch den Zylinderlängsschlitz ragende Kolbenanschlusselement mit dem anzutreibenden Bauteil verbunden. Der Druckmittelzylinder kann somit für verhältnismäßig lange Hubwege ausgelegt werden, ohne dass hierfür eine entsprechend lange Kolbenstange erforderlich ist. Außerdem entfällt bei derartigen doppeltwirkenden Druckmittelzylindern die Notwendigkeit einer Abdichtung der aus dem Zylinderrohr herausgeführten Kolbenstange.

Der Zylinderlängsschlitz muss in den jeweils mit Druck beaufschlagten Zylinderbereichen abgedichtet werden. Das hierzu dienende elastische Dichtband muss den dabei auftretenden Innendrücken standhalten. Das Zylinderrohr ist an seinen beiden Enden durch Endflansche dicht verschlossen. Das an der Zylinderinnenseite dicht anliegende Dichtband wird im Bereich des Kolbens durch eine Öffnung unter dem Kolbenanschlusselement hindurchgeführt, so dass der Zylinderlängsschlitz jeweils an der Stelle geöffnet ist, an der das Kolbenanschlusselement durch den Zylinderlängsschlitz hindurchragt.

Um das elastische Dichtband für höhere Zylinderinnendrücke auszulegen, ist bei einem bekannten Druckmittelzylinder der genannten Gattung (EP 0 260 344 A2) im Dichtband ein ebener Versteifungsstreifen höherer Festigkeit eingelegt und mindestens teilweise eingebettet. Der Versteifungsstreifen ist zum Zylinderinnenraum durch das Dichtband abgedeckt. Beiderseits des Zylinderlängsschlitzes sind Auflageflächen ausgebildet, gegen die das Versteifungsband abstützbar ist. Bei dem bekannten Druckmittelzylinder wird das Dichtband zwischen seitlichen Flächen des Zylinderlängsschlitzes seitlich fixiert und zentriert. Bei hohen Zylinderinnendrücken wird das elastische Dichtband infolge seiner Stauchung verstärkt nach beiden Seiten gedrückt. Auch beim Herausbiegen des Dichtbandes aus dem Zylinderlängsschlitz entsteht eine Verformung nach beiden Seiten, die zu einer erhöhten Anpresskraft an den seitlichen Führungsflächen des Zylinderlängsschlitzes und somit zu einer erhöhten Reibung führt. Dadurch wird ein Verschleiß des Dichtbandes verursacht. Auch beim erneuten Einführen des Dichtbandes wird ein Verschleiß dadurch verursacht, dass das infolge seiner Biegung seitlich aufgeweitete Dichtband in den Raum zwischen den beiden seitlichen Führungsflächen hineingedrückt werden muss.

Bei einem bekannten Druckmittelzylinder mit einem längsgeschlitzten Zylinderrohr der eingangs genannten Gattung (EP 0 531 131 A1) springt jeweils am Fuß jedes rückseitigen Längswulstes seitlich eine Dichtungsrippe vor, die an einer Stufe des Zylinderlängsschlitzes anliegt. Im Querschnitt betrachtet, sind die Führungsrippen jeweils quer zum jeweiligen Längswulst angeordnet. Bei erhöhtem Zylinderinnendruck übt diese Stufe auf die Dichtungsrippe eine erhöhte Dichtkraft aus, die zu einer Biegebeanspruchung der Dichtrippe führt, die sich auch auf den anschließenden Längswulst überträgt. Die sich quer zum jeweiligen Längswulst erstreckenden Führungsrippen liegen nun mit ihrer der Umgebung zugewandten Oberseite am Zylinderrohr an; die Unterseiten der Führungsrippen und die jeweiligen Stirnseiten werden von der Stufe demgegenüber nicht berührt. Der Längswulst wird dadurch verstärkt in seitlicher Richtung gegen die Wand des Zylinderlängsschlitzes gedrückt. Dadurch wird die aus Gründen des Verschleißes unverwünschte Reibung zwischen dem Längswulst des Dichtbandes und der Wand des Zylinderlängsschlitzes noch erhöht.

### Darstellung der Erfindung

Aufgabe der Erfindung ist es daher, einen Druckmittelzylinder der eingangs genannten Gattung so auszubilden, dass bei einer genauen und wirksamen Zentrierung des Dichtbandes gleichwohl der Verschleiß verringert wird.

Diese Aufgabe wird erfindungsgemäß dadurch gelöst, dass zwischen jedem Längswulst und dem benachbarten Bandrandstreifen an der Bandrückseite jeweils eine längsverlaufende, im Querschnitt betrachtet, sich parallel zum jeweiligen Längswulst erstreckende Führungsrippe vorspringt, die in einer Führungsnut des Zylinderrohrs abgestützt ist, dass der äußere Rand der Führungsrippe im Querschnitt abgerundet ist, dass die Führungsnut eine entsprechend abgerundete Querschnittsform aufweist und den äußeren Rand klammerförmig umschließt und dass das Dichtband einen mindestens teilweise eingebetteten Versteifungsstreifen aufweist.

Hierbei werden die längsverlaufenden Führungsrippen sowohl zur Abstützung als auch zur Zentrierung des Dichtbandes herangezogen. Die Reibung zwischen dem elastischen Dichtband und dem Zylinderrohr im Bereich des Zylinderlängsschlitzes wird auf ein Mindestmaß herabgesetzt. Die Dichtwirkung wird erhöht. Die Verformungen des Dichtbandes bei hohen Zylinderinnendrücken werden auf ein Mindestmaß verringert, so dass auch die Gefahr eines Ausdrückens des Dichtbandes durch den Zylinderlängsschlitz hindurch bei hohen Zylinderinnendrücken wesentlich verringert wird,

Beim Ein- und Ausklinken des Dichtbandes aus dem Zylinderlängsschlitz entsteht keine Reibung, weil die üblicherweise in den Zylinderlängsschlitz hineinragenden Längswülste oder Längsrippen auch unter erhöhtem Zylinderinnendruck mit beiderseitigem Spiel zu den benachbarten seitlichen Wänden des Führungslängsschlitzes angeordnet sind, so dass praktisch keine seitliche Reibung auftritt.

Weitere vorteilhafte Ausgestaltungen des Erfindungsgedankens sind Gegenstand weiterer Unteransprüche.

### Kurzbeschreibung der Zeichnungen

Die Erfindung wird nachfolgend an einem Ausführungsbeispiel näher erläutert, das in der Zeichnung dargestellt ist. Es zeigt:
Fig. 1 in einem Teilschnitt quer zur Zylinderlängsachse einen Abschnitt eines Druckmittelzylinders mit einem Zylinderlängsschlitz, der durch ein elastisches Dichtband abgedeckt ist,
Fig. 2 in einer Darstellung entsprechend der Fig. 1 eine abgewandelte Ausführungsform des Dichtbandes,

### Ausführung der Erfindung

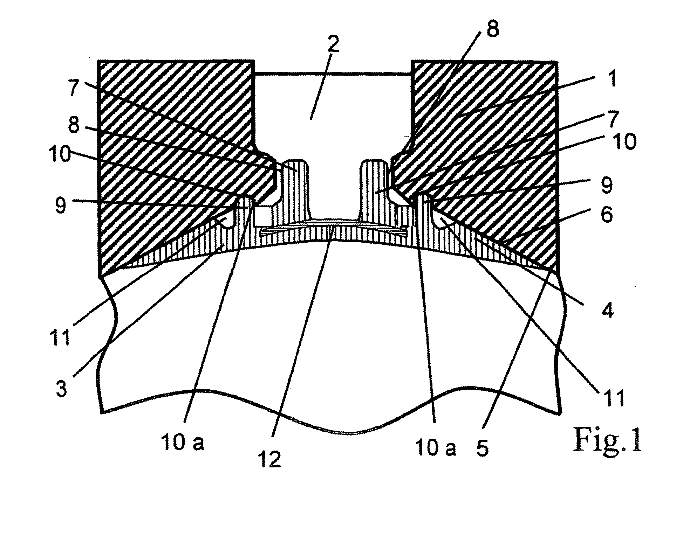

Das in Fig. 1 in einem Teilschnitt dargestellte Zylinderrohr 1 eines Druckmittelzylinders weist an einer Umfangsstelle einen Zylinderlängsschlitz 2 auf. Ein im Zylinderrohr 1 längsbeweglicher (nicht dargestellter) Kolben ist mit einem durch den Zylinderlängsschlitz 2 ragenden Kolbenanschlusselement verbunden.

In den mit Innendruck beaufschlagten Zylinderbereichen beiderseits des Kolbens liegt an der Zylinderinnenseite ein elastisch verformbares Dichtband 3 aus einem Elastomer-Material, beispielsweise Polyurethan, an, das den Zylinderlängsschlitz 2 dicht verschließt. Das Dichtband 3 weist an seinen beiden Längsrändern im Querschnitt keilförmige Bandrandsteifen 4 auf, die an einer von der Zylinderinnenwand 5 zum Zylinderlängsschlitz 2 abfallenden Schrägfläche 6 anliegen.

An der dem Zylinderlängsschlitz 2 zugekehrten Bandrückseite springen Längswülste 7 oder Längsflansche vor, die im Abstand zueinander angeordnet sind und mit seitlichem Spiel zwischen gegenüberliegende Seitenflächen 8 des Zylinderlängsschlitzes 2 ragen. Die beiden Längswülste 7 sind beim dargestellten Ausführungsbeispiel jeweils als Längsrippen ausgeführt und im Abstand zur jeweils benachbarten seitlichen Fläche 8 des Zylinderlängsschlitzes 2 angeordnet. Zwischen jedem Längswulst 7 und dem benachbarten Bandrandstreifen 4 springt an der Bandrückseite jeweils eine längsverlaufende Führungsrippe 9 vor, die in einer Führungsnut 10 des Zylinderrohrs 1 abgestützt ist.

Der äußere Rand jeder Führungsrippe 9 ist im Querschnitt abgerundet. Die Führungsnut 10 weist eine entsprechend abgerundete Querschnittsform auf.

Der schlitzseitige Rand 10a der Führungsnut 10 ragt über die Ebene der Schrägfläche 6 hinaus.

Zwischen der an der Schrägfläche 6 anliegenden Rückseite des Bandrandstreifens 4 und der benachbarten Führungsrippe 9 ist eine Längsnut 11 angeordnet. Dadurch wird insbesondere erreicht, dass die Verformbarkeit der keilförmigen Bandrandstreifen 4 nicht durch die auf die Führungsrippen 9 wirkenden Stützkräfte beeinträchtigt wird.

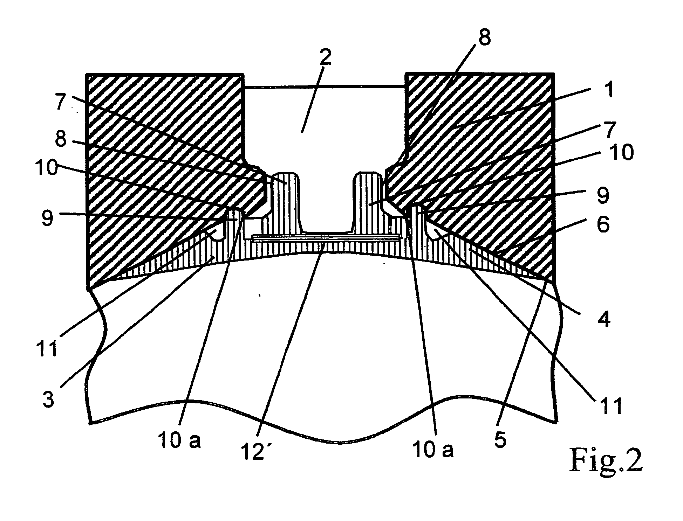

Im Dichtband 3 ist ein Versteifungsstreifen 12 mindestens teilweise eingebettet, der sich nach beiden Seiten angenähert bis in den Bereich der Führungsrippen 7 erstreckt. Der vorzugsweise aus Blech bestehende Versteifungsstreifen 12 ist beim Ausführungsbeispiel nach Fig. 1 im Querschnitt zum Zylinderinneren hin konkav gewölbt. Das Ausführungsbeispiel nach Fig. 2 unterscheidet sich hiervon nur dadurch, dass der Versteifungsstreifen 12' hierbei eben ausgeführt ist. Stattdessen kann der Versteifungsstreifen 12 auch im Querschnitt zum Zylinderinneren hin konvex gewölbt sein.

## Patentansprüche

1. Druckmittelzylinder mit einem in einem längsgeschlitzten Zylinderrohr längsbeweglichen Kolben, der mit einem durch den Zylinderlängsschlitz ragenden Kolbenanschlusselement verbunden ist, mit einem den Zylinderlängsschlitz an der Zylinderinnenseite dicht verschließenden, elastisch verformbaren Dichtband, das an der Zylinderinnenseite anliegende Bandrandstreifen und an der Bandrückseite in den Zylinderlängsschlitz ragende Längswülste aufweist, **dadurch gekennzeichnet, dass** zwischen jedem Längswulst (7) und dem benachbarten Bandrandstreifen (4) an der Andrückseite jeweils eine längsverlaufende, im Querschnitt betrachtet, sich parallel zum jeweiligen Längswulst (7) erstreckende Führungsrippe (9) vorspringt, die in einer Führungsnut (10) des Zylinderrohrs (1) abgestützt ist, dass der äußere Rand der Führungsrippe (9) im Querschnitt abgerundet ist, dass die Führungsnut (10) eine entsprechend gerundete Querschnittsform aufweist und den äußeren Rand klammeförmig umschließt und dass das Dichtband (3) einen mindestens teilweise eingebetteten Versteifungsstreifen (12, 12') aufweist.

2. Druckmittelzylinder nach Anspruch 1, **dadurch gekennzeichnet, dass** der im Querschnitt keilförmige Bandrandstreifen (4) an einer von der Zylinderinnenwand (5) zum Zylinderlängsschlitz (2) abfallenden Schrägfläche (6) anliegt und dass der schlizseitige Rand (10a) der Führungsnut (10) über die Ebene der Schrägfläche (6) hinausragt.

3. Druckmittelzylinder nach Anspruch 2, **dadurch gekennzeichnet, dass** zwischen der an der Schrägfläche (6) anliegenden Rückseite des Bandrandstreifens (4) und der benachbarten Führungsrippe (9) eine Längsnut (11) angeordnet ist.

4. Druckmittelzylinder nach Anspruch 1, **dadurch gekennzeichnet, dass** die beiden Längswülste (9) jeweils als Längsrippen ausgeführt sind und im Abstand zur jeweils benachbarten seitlichen Fläche (8) des Zylinderlängsschlitzes (2) angeordnet sind.

5. Druckmittelzylinder nach Anspruch 1, **dadurch gekennzeichnet, dass** im Dichtband (3) ein Versteifungsstreifen (12, 12') mindestens teilweise eingebettet ist, der sich nach beiden Seiten angenähert bis in den Bereich der Führungsrippe (9) erstreckt.

6. Druckmittelzylinder nach Anspruch 5, **dadurch gekennzeichnet, dass** der Versteifungsstreifen ('12, 12') aus Blech besteht.

7. Druckmittelzylinder nach Anspruch 5, **dadurch gekennzeichnet, dass** der Versteifungsstreifen (12) im Querschnitt zum Zylinderinneren hin konkav gewölbt ist.

8. Druckmittelzylinder nach Anspruch 5, **dadurch gekennzeichnet, dass** der Versteifungsstreifen im Querschnitt zum Zylinderinneren hin konvex gewölbt ist.

9. Druckmittelzylinder nach Anspruch 5, **dadurch gekennzeichnet, dass** der Versteifungsstreifen (12') eben ist.

## Claims

1. Pressure medium cylinder having a piston which is longitudinally movable in a longitudinally slotted cylinder barrel and which is connected to a piston attachment element which projects through the cylinder longitudinal slot, having an elastically deformable sealing band which sealingly closes off the cylinder longitudinal slot at the cylinder inner side and which has band edge strips bearing against the cylinder inner side and has longitudinal beads which project from the rear side of the band into the cylinder longitudinal slot, **characterized in that**, between each longitudinal bead (7) and the adjacent band edge strip (4), in each case one longitudinally running guide rib (9), which extends parallel to the respective longitudinal bead (7) as viewed in cross section, projects from the rear side of the band, which guide rib (9) is supported in a guide groove (10) of the cylinder barrel (1), **in that** the outer edge of the guide rib (9) is rounded in cross section, **in that** the guide groove (10) has a correspondingly rounded cross-sectional shape and surrounds the outer edge in the shape of a bracket, and **in that** the sealing band (3) has an at least partially embedded stiffening strip (12, 12').

2. Pressure medium cylinder according to Claim 1, **characterized in that** the band edge strip (4), which is wedge-shaped in cross section, bears against an inclined surface (6) which slopes away from the cylinder inner wall (5) to the cylinder longitudinal slot (2), and **in that** the slot-side edge (10a) of the guide groove (10) projects beyond the plane of the inclined surface (6).

3. Pressure medium cylinder according to Claim 2, **characterized in that** a longitudinal groove (11) is arranged between the rear side, which bears against the inclined surface (6), of the band edge strip (4) and the adjacent guide rib (9).

4. Pressure medium cylinder according to Claim 1, **characterized in that** the two longitudinal beads (9) are formed in each case as longitudinal ribs and are arranged at a distance from the in each case adjacent side surface (8) of the cylinder longitudinal slot (2).

5. Pressure medium cylinder according to Claim 1, **characterized in that** a stiffening strip (12, 12') is at least partially embedded in the sealing band (3), which stiffening strip extends to both sides approximately into the region of the guide rib (9).

6. Pressure medium cylinder according to Claim 5, **characterized in that** the stiffening strip (12, 12') is composed of sheet metal.

7. Pressure medium cylinder according to Claim 5, **characterized in that** the stiffening strip (12) is concavely arched towards the cylinder interior in cross section.

8. Pressure medium cylinder according to Claim 5, **characterized in that** the stiffening strip is convexly arched towards the cylinder interior in cross section.

9. Pressure medium cylinder according to Claim 5, **characterized in that** the stiffening strip (12') is planar.

## Revendications

1. Vérin à fluide sous pression qui présente
un piston pouvant se déplacer longitudinalement dans un tube de vérin fendu longitudinalement et relié à un élément de raccordement de piston qui traverse la fente longitudinale du vérin,
un ruban d'étanchéité élastiquement déformable et qui ferme de manière étanche la fente longitudinale du vérin sur le côté intérieur du vérin, le ruban d'étanchéité présentant un bord de ruban reposant contre le côté intérieur du vérin et des bourrelets longitudinaux disposés sur le côté dorsal du ruban et qui pénètrent dans la fente longitudinale du vérin, **caractérisé en ce que**
une nervure de guidage (9) qui s'étend longitudinalement entre chaque bourrelet longitudinal (7) et la bordure de ruban (4) voisine sur le côté dorsal du ruban déborde en coupe transversale en s'étendant parallèlement à chaque bourrelet longitudinal (7) en étant soutenue dans une rainure de guidage (10) du tube (1) du vérin,
**en ce que** le bord extérieur de la nervure de guidage (9) a une section transversale arrondie,
**en ce que** la rainure de guidage (10) présente une section transversale de forme arrondie en correspondance et chevauche en forme de pince le bord extérieur et
**en ce qu'**une bande de renfort (12, 12') est au moins partiellement incorporée dans le ruban d'étanchéité (3).

2. Vérin à fluide sous pression selon la revendication 1, **caractérisé en ce que** la bordure de ruban (4) de section transversale en forme de biseau repose sur une surface oblique (6) qui descend depuis la paroi intérieure (5) du vérin jusqu'à la fente longitudinale (2) du vérin et **en ce que** le bord (10a), situé du côté de la fente, de la rainure de guidage (10) déborde au-delà du plan de la surface oblique (6).

3. Vérin à fluide sous pression selon la revendication 2, **caractérisé en ce qu'**une rainure longitudinale (11) est disposée entre le côté dorsal, reposant contre la surface oblique (6), de la bordure (4) du ruban et la nervure de guidage (9) voisine.

4. Vérin à fluide sous pression selon la revendication 1, **caractérisé en ce que** chacun des deux bourrelets longitudinaux est configuré comme nervure longitudinale et est disposé à distance de la surface latérale voisine respective de la fente longitudinale (2) du vérin.

5. vérin à fluide sous pression selon la revendication 1, **caractérisé en ce qu'**au moins une partie d'une bande de renfort (12, 12') qui s'étend des deux côtés sensiblement jusqu'au niveau de la nervure de guidage (9) est incorporée dans le ruban d'étanchéité (3).

6. Vérin à fluide sous pression selon la revendication 5, **caractérisé en ce que** la bande de renfort (12, 12') est constituée d'une tôle.

7. Vérin à fluide sous pression selon la revendication 5, **caractérisé en ce que** la section transversale de la bande de renfort (12) est cintrée avec une concavité tournée vers l'intérieur du vérin.

8. Vérin à fluide sous pression selon la revendication 5, **caractérisé en ce que** la section transversale de la bande de renfort est cintrée avec une convexité tournée vers l'intérieur du vérin.

9. Vérin à fluide sous pression selon la revendication 5, **caractérisé en ce que** la section transversale de la bande de renfort (12') est plane.
